# EUROPEAN PATENT SPECIFICATION

(11) **EP 4 030 446 B1**
(45) Date of publication and mention of the grant of the patent: **16.04.2025**
(21) Application number: 20862794.3
(22) Date of filing: 19.08.2020
(51) Int. Cl.: H01F 5/00, H01F 27/28, H01F 17/00, H01F 17/04, H01B 1/22

(54) **PLANAR COIL, AND TRANSFORMER, WIRELESS TRANSMITTER, AND ELECTROMAGNET PROVIDED WITH PLANAR COIL**
FLACHSPULE UND TRANSFORMATOR, DRAHTLOSER SENDER UND ELEKTROMAGNET MIT FLACHSPULE
BOBINE PLANE, ET TRANSFORMATEUR, ÉMETTEUR SANS FIL ET ÉLECTRO-AIMANT COMPORTANT UNE BOBINE PLANE

(30) Priority: 10.09.2019 JP 2019164587
(43) Date of publication of application: 20.07.2022
(73) Proprietor: Kyocera Corporation, Kyoto-shi Kyoto 612-8501 (JP)
(72) Inventor: MUNEISHI, Takeshi, Kyoto-shi, Kyoto 612-8501 (JP)
(74) Representative: Viering, Jentschura & Partner mbB Patent- und Rechtsanwälte
(86) International application number: PCT/JP2020/031344
(87) International publication number: WO 2021/049270

(56) References cited:
- JP-A- 2001 110 639
- JP-A- 2003 059 720
- JP-A- 2003 059 720
- JP-A- 2004 140 174
- JP-A- 2005 159 301
- JP-A- 2012 209 388
- JP-A- 2015 207 709
- JP-A- H0 465 011
- JP-A- H0 465 011
- JP-A- H06 151 183
- JP-A- H08 279 574
- US-A1- 2015 310 963

## Description

### Technical Field

The present disclosure relates to a planar coil, and a transformer, a wireless power transmitter, and an electromagnet provided with the same.

### Background Art

A planar coil is acquired by forming a metal layer on an insulating base. For example, Patent Document 1 discloses a laminated coil in which a coil pattern is formed on an insulating substrate by electroplating.

JP 2004 140174 A discloses an electronic component comprising a substrate, an adhesive layer supplied on the substrate, a transferred pattern formed by transferring, onto the adhesive, conductive paste which is composed of a solvent, a powder conductor, and a binder and with which trenches of an intaglio plate formed of flexible resin are filled up, and a conductor pattern formed by baking the transferred pattern.

US 2015/310963 A1 discloses a method of making a thin-film multi-layer micro-wire structure that includes providing a substrate and a layer on the substrate with one or more micro-channels having a width less than or equal to 20 microns. A conductive material including silver nano-particles and having a percent ratio of silver that is greater than or equal to 40% by weight is located in the micro-channels and cured to form an electrically conductive micro-wire. The electrically conductive micro-wire has a width less than or equal to 20 microns and a depth less than or equal to 20 microns. Each micro-wire is electrolessly plated to form a plated layer located at least partially within each micro-channel between the micro-wire and the layer surface in electrical contact with the micro-wire. The plated layer has a thickness less than a thickness of the micro-wire so that the micro-wire and plated layer form the thin-film multi-layer micro-wire.

JP 2003 059720 A discloses coil conductors electrically connected together through an intermediary of interlayer insulating layers where viahole electrodes are provided to form a first coil unit and a second coil unit on the first and second main surface of a board respectively for the formation of an inductor.

JP H04 65011 A discloses a conductive paste composed of 75 to 90 wt.% of copper powder A having an average particle diameter of 2µm to 4µm and 10 to 25 wt.% of copper powder B having an average diameter of 0.1 µm or less.

JP 2012 209388 A discloses a method for forming a coil that includes: respective pattern forming steps in which a copper paste having copper nanofillers mixed with an organic solvent (terpineol and ethanol) is applied onto an insulating substrate having insulating properties to form respective coil patterns; and a sintering step in which the organic solvent contained in the respective coil patterns is removed and the copper nanofillers are sintered (metal-joined) together into a metal sintered compact, by heating.

### Citation List

### Patent Literature

Patent Document 1: JP 2006-33953 A

### Summary of Invention

The present invention provides a planar coil according to claim 1, a transformer according to claim 12, a wireless power transmitter according to claim 13, and an electromagnet according to claim 14. Further embodiments of the present invention are disclosed in the dependent claims.

### Brief Description of Drawings

FIG. 1 is a plan view of an example of a planar coil of the present disclosure when viewed from a first surface side.
FIG. 2 is a diagram illustrating an example of a cross-sectional view taken along line A-A' in FIG. 1.
FIG. 3 is a diagram illustrating an example of an enlarged view in a S portion illustrated in FIG. 2.
FIG. 4 is a diagram illustrating an example of an enlarged view in the S portion illustrated in FIG. 2.
FIG. 5 is a diagram illustrating an example of a cross-sectional view taken along line A-A' in FIG. 1.
FIG. 6 is a plan view of another example of a planar coil of the present disclosure when viewed from a first surface side.
FIG. 7 is a diagram illustrating an example of a cross-sectional view taken along line B-B' in FIG. 6.
FIG. 8 is a diagram illustrating an example of a cross-sectional view taken along line B-B' in FIG. 6.
FIG. 9 is a diagram illustrating an example of a cross-sectional view taken along line B-B' in FIG. 6.
FIG. 10 is a diagram illustrating an example of a cross-sectional view taken along line B-B' in FIG. 6.
FIG. 11 is a plan view of another example of the planar coil of the present disclosure when viewed from a second surface side.
FIG. 12 is a diagram illustrating an example of a cross-sectional view taken along line C-C' in FIG. 11.
FIG. 13A is a perspective view of a transformer of the present disclosure.
FIG. 13B is a cross-sectional view taken along line D-D' in FIG. 13A.
FIG. 13C is a plan view of a first surface of a planar coil.
FIG. 13D is a plan view of a first surface of a planar coil.
FIG. 14A is a perspective view of a wireless power transmitter of the present disclosure.
FIG. 14B is a cross-sectional view taken along line E-E' in FIG. 14A.
FIG. 14C is a plan view of a first surface of a planar coil.
FIG. 15 is a perspective view of an electromagnet of the present disclosure.

### Description of Embodiments

A planar coil is acquired by forming a metal layer on an insulating base. For example, a laminated coil having a coil pattern formed by electroforming plating on an insulating substrate is disclosed. On the other hand, when such a laminated coil is used as a coil, since current flows through the metal layer, the metal layer easily generates heat. Therefore, it is expected to implement a planar coil having high heat dissipation.

A planar coil of the present disclosure, and a transformer, a wireless power transmitter, and an electromagnet provided with the same will be described in detail below with reference to the drawings.

It is noted that the drawings are schematic and the dimensional relationship between elements, the proportions of elements, and the like may differ from realistic ones. Furthermore, even between the drawings, there may be a case where portions having different dimensional relationships, proportions, and the like from one another are included.

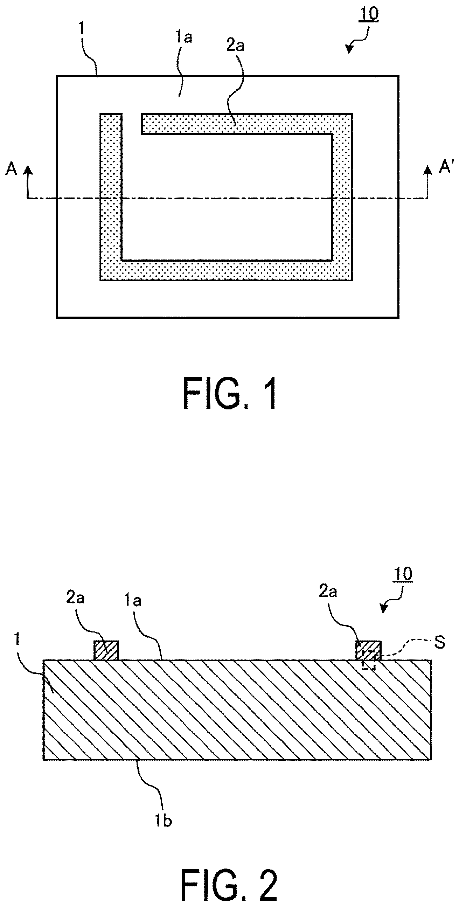

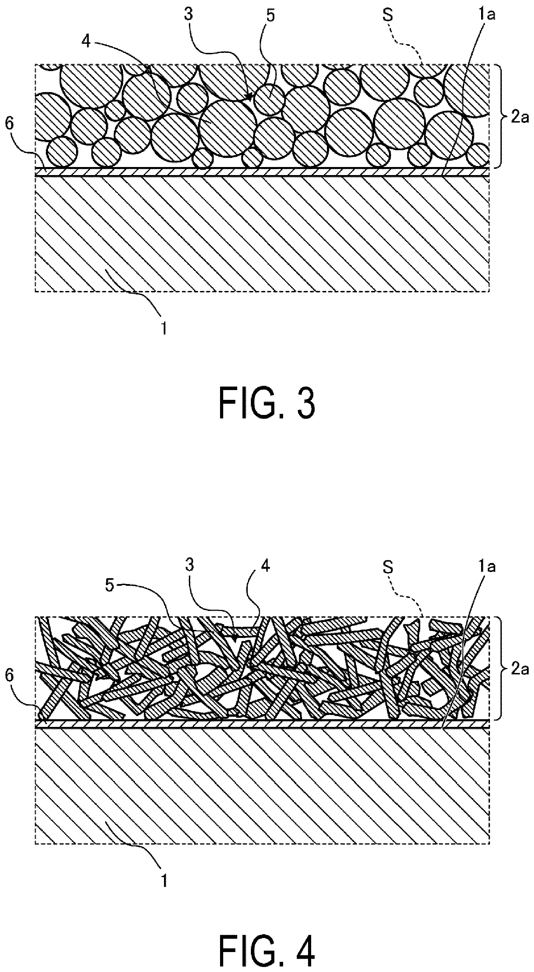

As illustrated in FIGS. 1 and 2, a planar coil 10 of the present disclosure includes a base 1 having a first surface 1a. Furthermore, the planar coil 10 includes a first metal layer 2a located on the first surface 1a. Furthermore, the first metal layer 2a includes a plurality of voids 3 (see FIG. 3).

The base 1 in the planar coil 10 of the present disclosure includes at least a magnetic material. Furthermore, all materials of the base 1 in the planar coil 10 of the present disclosure may be magnetic materials.

For example, the magnetic material has magnetism, or has magnetism by an external magnetic field. Examples of the magnetic material include ferrite, iron, silicon iron, iron-nickel based alloys, and iron-cobalt based alloys. Permalloy is an example of an iron-nickel based alloy. Furthermore, permendur is an example of an iron-cobalt based alloy.

Examples of the base 1 including the magnetic material include ceramics including various magnetic materials described above. Examples of the ceramics include aluminum oxide ceramics, silicon carbide ceramics, cordierite ceramics, silicon nitride ceramics, aluminum nitride ceramics, mullite ceramics, and the like. Examples of ceramics including the magnetic materials include silicon carbide including iron, and the like.

The base 1 may be used as a magnetic core (core).

As illustrated in FIGS. 1 and 2, the base 1 may have a plate shape. The base 1 may include the first surface 1a and a second surface 1b located on an opposite side of the first surface 1a. Furthermore, the first metal layer 2a may be located on the first surface 1a of the base 1 in a meandering shape or a spiral shape. Furthermore, the first metal layer 2a may be positioned on the first surface 1a of the base 1 in any arrangement.

As illustrated in FIG. 3, the first metal layer 2a includes the voids 3. Therefore, the surface area of the first metal layer 2a is larger than that of a metal layer having no voids. Consequently, the planar coil 10 has high heat dissipation.

Furthermore, as illustrated in FIG. 3, the first metal layer 2a may include first metal particles 4 and second metal particles 5. The voids 3 may be located between the first metal particles 4 and the second metal particles 5. With such a configuration, heat generated by the first metal particles 4 and the second metal particles 5 is absorbed by the voids 3, so that the planar coil 10 has high heat dissipation.

Materials of the first metal particles 4 and the second metal particles 5 constituting the first metal layer 2a may be, for example, stainless steel or copper.

As illustrated in FIGS. 3 and 4, the first metal particles 4 and the second metal particles 5 may each have a spherical shape, a granular shape, a whisker shape, or a needle shape, for example. When the first metal particles 4 and the second metal particles 5 each have a whisker shape or a needle shape, the first metal particles 4 and the second metal particles 5 may be bent. The first metal particles 4 and the second metal particles 5 may each include corners. When the first metal particles 4 and the second metal particles 5 each have a spherical shape or a granular shape, the longitudinal lengths of the first metal particles 4 and the second metal particles 5 may be 0.5 µm or more and 200 µm or less. When the first metal particles 4 and the second metal particles 5 each have a whisker shape or a needle shape, the diameter may be 1 µm or more and 100 µm or less, and the length may be 100 µm or more and 5 mm or less.

In FIG. 3, the first metal particles 4 and the second metal particles 5 each have a granular shape. In FIG. 4, the first metal particles 4 and the second metal particles 5 each have a whisker shape.

Furthermore, an average thickness of the first metal layer 2a may be 1 µm or more and 5 mm or less.

Furthermore, a porosity of the first metal layer 2a may be, for example, 10% or more and 90% or less. The porosity is an index representing the proportion of the voids 3 in the first metal layer 2a, and the porosity of the first metal layer 2a may be calculated by measurement using the Archimedes method.

Furthermore, as illustrated in FIGS. 3 and 4, the planar coil 10 of the present disclosure may include a bonding layer 6 located between the first metal layer 2a and the first surface 1a. With such a configuration, the first metal layer 2a is less likely to be peeled off from the base 1. Furthermore, the bonding layer 6 easily relieves stress generated by the difference in thermal expansion coefficients between the first metal layer 2a and the base 1. Therefore, cracks are less likely to occur in the base 1. Consequently, the planar coil 10 of the present disclosure can withstand long-term use. An average thickness of the bonding layer 6 may be 1 µm or more and 0.5 mm or less.

Furthermore, the bonding layer 6 in the planar coil 10 of the present disclosure may include resin or glass. As the resin, there is silicone or imide-amide, for example. As the glass, there is borosilicate glass or silicic acid-based glass, for example. When the bonding layer 6 includes the above material, the first metal layer 2a and the base 1 are firmly bonded, and the first metal layer 2a is less likely to be peeled off from the base 1.

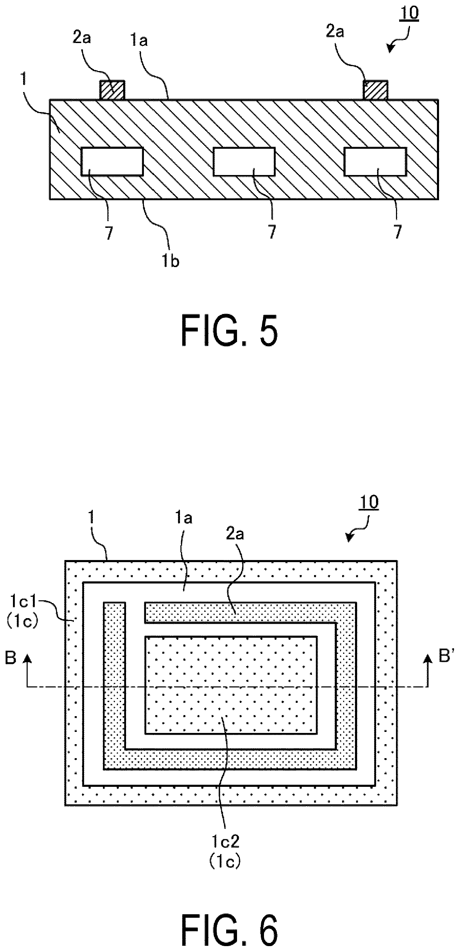

FIG. 5 is a diagram illustrating an example of a cross-sectional view taken along line A-A' in FIG. 1. As illustrated in FIG. 5, the base 1 in the planar coil 10 of the present disclosure includes a channel 7 therein. With such a configuration, the temperature of the first metal layer 2a can be adjusted by flowing a fluid through the channel 7 of the base 1.

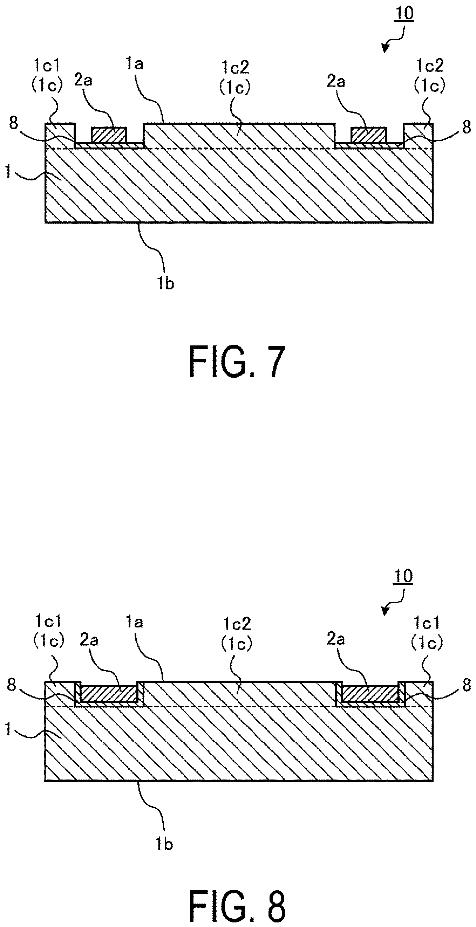

FIG. 6 is a plan view of another example of the planar coil 10 of the present disclosure when viewed from the first surface 1a side, and FIG. 7 is a diagram illustrating an example of a cross-sectional view taken along line B-B' in FIG. 6. As illustrated in FIGS. 6 and 7, the base 1 in the planar coil 10 of the present disclosure may include a protruding portion 1c protruding from the first surface 1a. As illustrated in FIG. 7, the height of the protruding portion 1c is higher than that of the first metal layer 2a.

With such a configuration, when a plurality of the planar coils 10 are laminated to form a laminated coil, the protruding portion 1c is brought into contact with the base 1 of another laminated planar coil. Therefore, the plurality of planar coils 10 can be laminated without damaging the first metal layer 2a. When a second metal layer 2b is present on the second surface 1b, the base 1 may include the protruding portion 1c protruding from the second surface 1b.

Furthermore, as illustrated in FIG. 6, the protruding portion 1c in the planar coil 10 of the present disclosure may be located around the first metal layer 2a located on the first surface 1a. FIG. 6 illustrates an example in which the base 1 includes a protruding portion 1c1 having a frame shape in the plan view and a protruding portion 1c2 having a rectangular shape in the plan view, and the first metal layer 2a is located in a region surrounded by the protruding portion 1c1 and the protruding portion 1c2.

With such a configuration, the plurality of planar coils 10 can be stably laminated without damaging the first metal layer 2a.

As illustrated in FIG. 7, the planar coil 10 of the present disclosure may include an insulating layer 8 located between the first metal layer 2a and the first surface 1a. With such a configuration, even when the base 1 is made of a material having electrical conductivity such as iron, the first metal layer 2a is not short-circuited with the first metal layer 2a at another location by the base 1, and the first metal layer 2a can serve as a coil on the first surface 1a.

Furthermore, the insulating layer 8 in the planar coil 10 of the present disclosure may include glass, resin, or ceramics. As the glass, there is borosilicate glass or silicic acid-based glass, for example. As the resin, there is silicone or imide-amide, for example. Examples of the ceramics include aluminum oxide ceramics, silicon carbide ceramics, cordierite ceramics, silicon nitride ceramics, aluminum nitride ceramics, mullite ceramics, and the like.

In the present disclosure, the bonding layer 6 having an insulating property may be used as the insulating layer 8. Furthermore, in the present disclosure, when the base 1 has an insulating property, the insulating layer 8 may not be disposed.

FIG. 8 is a diagram illustrating an example of a cross-sectional view taken along line B-B' in FIG. 6. As illustrated in FIG. 8, the first metal layer 2a in the planar coil 10 of the present disclosure may be in contact with the side surface of the protruding portion 1c via the insulating layer 8.

With such a configuration, heat generated by the first metal layer 2a of the planar coil 10 can be efficiently transmitted to the protruding portion 1c, so that heat generated by the first metal layer 2a can be efficiently dissipated. Consequently, the planar coil 10 has a higher heat dissipation property.

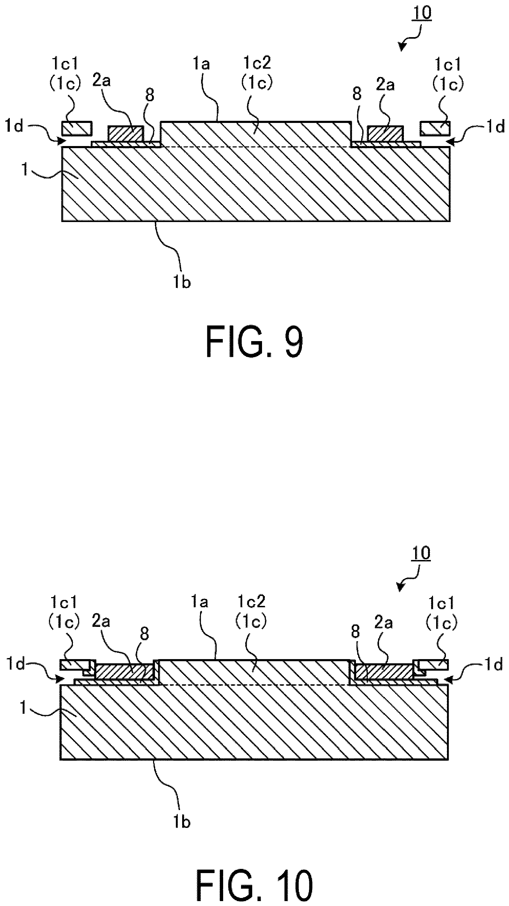

FIG. 9 is a diagram illustrating an example of a cross-sectional view taken along line B-B' in FIG. 6. As illustrated in FIG. 9, the protruding portion 1c in the planar coil 10 of the present disclosure may include a through hole 1d penetrating in the thickness direction (lateral direction in FIG. 9) of the protruding portion 1c.

With such a configuration, a gas for cooling can flow from the through hole 1d toward the first metal layer 2a, so that the first metal layer 2a can be efficiently cooled. Consequently, the planar coil 10 has a higher heat dissipation property.

FIG. 10 is a diagram illustrating an example of a cross-sectional view taken along line B-B' in FIG. 6. As illustrated in FIG. 10, the through hole 1d in the planar coil 10 of the present disclosure may include the insulating layer 8 on an inner wall surface facing the first metal layer 2a side.

With such a configuration, when a gas for cooling is flowed from the through hole 1d toward the first metal layer 2a, the gas can be accelerated at a portion where an inner diameter is reduced by the insulating layer 8, so that the gas can spread throughout the first metal layer 2a. Consequently, the planar coil 10 has a higher heat dissipation property.

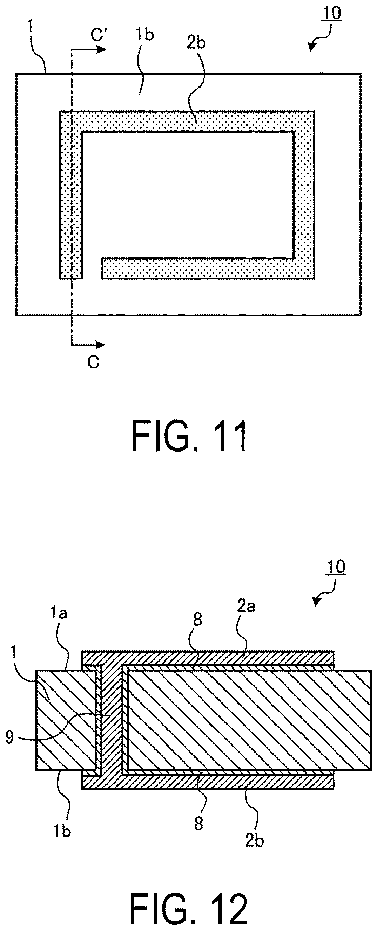

FIG. 11 is a plan view of another example of the planar coil 10 of the present disclosure when viewed from the second surface 1b side, and FIG. 12 is a diagram illustrating an example of a cross-sectional view taken along line C-C' in FIG. 11. As illustrated in FIG. 12, the planar coil 10 of the present disclosure may include the first metal layer 2a located on the first surface 1a and the second metal layer 2b located on the second surface 1b.

As illustrated in FIG. 11, the second metal layer 2b may be located on the second surface 1b of the base 1 in a meandering shape or a spiral shape. The second metal layer 2b may be located on the second surface 1b of the base 1 in any arrangement. The second metal layer 2b may be made of the same material as that of the first metal layer 2a. That is, the second metal layer 2b may include the plurality of voids 3 (see FIG. 3), and may include the first metal particles 4 (see FIG. 3) and the second metal particles 5 (see FIG. 3).

With such a configuration, the base 1 including a magnetic material is located between a coil located on the first surface 1a and a coil located on the second surface 1b, so that the coils can be prevented from interfering with each other.

Furthermore, as illustrated in FIG. 12, the planar coil 10 of the present disclosure may include a via 9 that electrically connects between the first metal layer 2a located on the first surface 1a and the second metal layer 2b located on the second surface 1b. A material constituting the via 9 is metal, but may be the same material as that of the first metal particles 4 and the second metal particles 5 constituting the first metal layer 2a and the second metal layer 2b.

With such a configuration, the first metal layer 2a, the via 9, and the second metal layer 2b form one metal layer, and the length of the metal layer can be extended on the limited surface of the base 1.

Furthermore, as illustrated in FIG. 12, the planar coil 10 of the present disclosure may include the insulating layer 8 located between the first metal layer 2a and the first surface 1a, the insulating layer 8 located between the second metal layer 2b and the second surface 1b, and the insulating layer 8 located between the via 9 and the base 1.

With such a configuration, even when the base 1 is made of a material having electrical conductivity such as iron, the first metal layer 2a and the second metal layer 2b are not short-circuited with each other by the base 1, and the first metal layer 2a and the second metal layer 2b can serve as a coil.

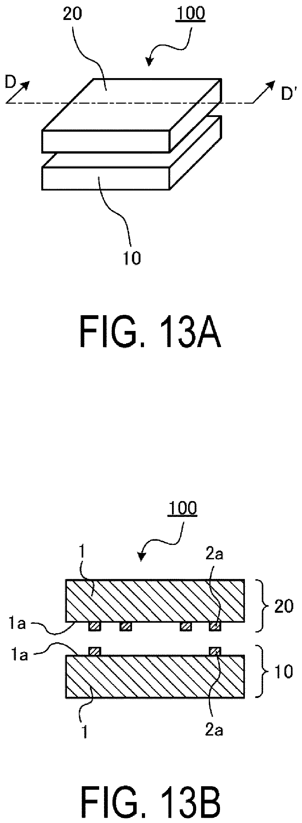

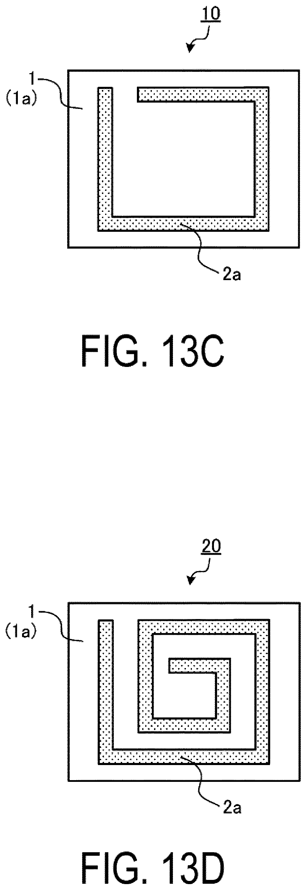

As illustrated in FIG. 13A, the planar coil 10 of the present disclosure may be provided in a transformer 100. The transformer 100 is provided with one or more planar coils 10 on a power supply side or a power supply and demand side, and can be the transformer 100 configured to convert voltage when current flows through the first metal layer 2a. As illustrated in FIGS. 13A and 13B, the transformer 100 may include the planar coil 10 on a power supply side. Furthermore, the transformer 100 may also include a planar coil 20 on a power supply and demand side. When an external power supply is connected to the planar coil 10 and current flows through the first metal layer 2a, electromagnetic induction is generated. Therefore, current flows through the first metal layer 2a of the planar coil 20. As illustrated in FIGS. 13C and 13D, the number of turns of the first metal layer 2a in the planar coil 10 may be different from that of the first metal layer 2a in the planar coil 20. By adjusting the number of turns in the planar coil 10 and the number of turns in the planar coil 20, voltage can be changed.

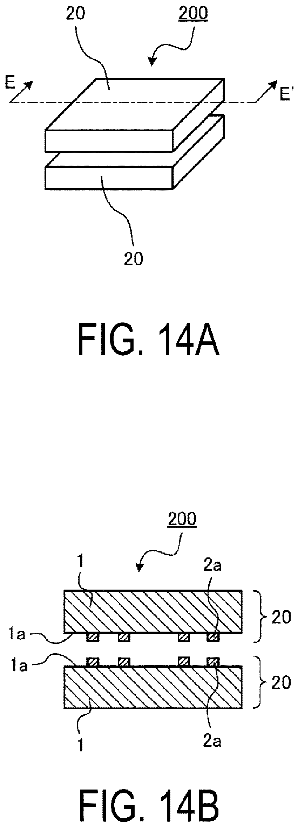

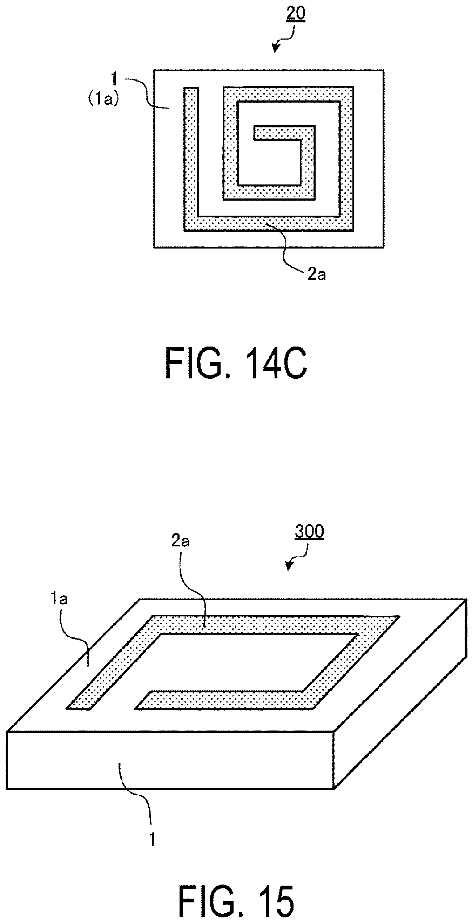

As illustrated in FIG. 14A, the planar coil 20 of the present disclosure may be provided in a wireless power transmitter 200. The wireless power transmitter 200 may include one or more planar coils 20 on a power supply side or a power supply and demand side. In this case, current flows through the first metal layer 2a, so that power can be transmitted. Therefore, the planar coil 20 of the present disclosure can be used as the wireless power transmitter 200. The wireless power transmitter 200 in FIGS. 14A and 14B may include the planar coil 20 provided on a power supply side, and the planar coil 20 provided on a power supply and demand side. When an external power supply is connected to the planar coil 20 and current flows through the first metal layer 2a, electromagnetic induction is generated. Therefore, current flows through the first metal layer 2a of the planar coil 20. In this way, the planar coil 20 of the present disclosure can be used as the wireless power transmitter 200 that delivers power.

As illustrated in FIG. 15, the planar coil 10 of the present disclosure may be provided in an electromagnet 300. The electromagnet 300 includes one or more planar coils 10, and when electricity is passed through the first metal layer 2a, a magnetic force is generated on a magnetic core. Therefore, the planar coil 10 of the present disclosure can be used as an electromagnet.

Next, an example of a method for manufacturing the planar coil of the present disclosure will be described.

First, the base 1 including a soft magnetic material is prepared. The channel 7 is provided inside the base 1 including a soft magnetic material. Furthermore, the base 1 may include the protruding portion 1c and the through hole 1d.

Next, the first metal layer 2a is formed on the first surface 1a of the base. First, a mask made of resin and having a desired shape is formed on the first surface 1a. Next, for example, a liquid mixture in which a plurality of metal particles including the first metal particles 4 and the second metal particles 5 made of stainless steel or copper are mixed with a liquid such as water is prepared, and is poured into a space formed by the mask. Next, the liquid mixture is evaporated. Thereafter, the mask is removed by burning or using a solvent. Moreover, after pressurizing the base 1 with a predetermined pressure, the base 1 is heated or ultrasonically vibrated. With this, the first metal particles 4 and the second metal particles 5 are bonded to acquire the first metal layer 2a having the voids 3.

Instead of directly forming the first metal layer 2a on the first surface 1a of the base 1, the bonding layer 6 may be first formed on the first surface 1a, and then the first metal layer 2a may be formed on the bonding layer 6. The bonding layer 6 is resin or glass. On the other hand, when the bonding layer 6 is resin or glass, the bonding layer 6 is formed before the mask is formed. In this case, the bonding layer 6 is formed by applying a paste having the resin or glass as a main component to the first surface 1a and performing heat treatment. Furthermore, the resin or glass may be formed to cover the entire first surface 1a of the base 1.

Then, by forming the first metal layer 2a on the bonding layer 6 and heating the base 1, the bonding layer 6 gets wet and is bonded to the first metal layer 2a when the bonding layer 6 is resin or glass.

The first metal layer 2a may be separately prepared and placed on the bonding layer 6 formed in advance on the first surface 1a, or a paste to be the bonding layer 6 may be applied to the first metal layer 2a and placed on the first surface 1a, and then a base may be heated, thereby acquiring the base 1 including the first metal layer 2a. In this case, the first metal layer 2a is produced in advance by the following method. First, for example, a liquid mixture in which a plurality of metal particles made of stainless steel or copper are mixed with a liquid such as water is prepared, and is poured into a mold having a shape of the first metal layer 2a. Next, the liquid mixture is evaporated. Next, the first metal particles 4 and the second metal particles 5 are bonded by pressurizing at a predetermined pressure and heating or by ultrasonic vibration. Then, when it is taken out from the mold, the first metal layer 2a including the bonded first metal particles 4 and second metal particles 5 and the voids 3 is acquired. Furthermore, by inserting the insulating layer 8 into the through hole 1d, the insulating layer 8 can be formed on the inner wall surface facing the first metal layer 2a side.

The first metal layer 2a may be produced by the following method. First, after a plurality of metal particles including the first metal particles 4 and the second metal particles 5 are mixed with a binder, a molded body is produced by a mechanical pressing method. Next, the binder is evaporated by drying the molded body. Then, it is heated or ultrasonically vibrated. This allows the first metal particles 4 and the second metal particles 5 to be bonded to acquire the first metal layer 2a having the voids 3.

When the via 9 that electrically connects between the first metal layer 2a and the second metal layer 2b is provided, the following is performed. A paste in which a plurality of metal particles including the first metal particles 4 and the second metal particles 5 are mixed with a binder is prepared and embedded in a hole formed in advance in the base 1. At this time, a wall surfaces of the hole may be covered with glass or resin in advance. Then, by evaporating the binder through heat treatment after or before the first metal layer 2a and the second metal layer 2b are formed, the via 9 can be formed.

Note that the present disclosure is not limited to the above-described embodiment, and various modifications, enhancements, and the like may be made without departing from the scope of the present disclosure as far as they lie within the scope of the appended claims.

### Reference Signs List

1 Base
1a First surface
1b Second surface
1c Protruding portion
1d Through hole
2a First metal layer
2b Second metal layer
3 Void
4 First metal particle
5 Second metal particle
6 Bonding layer
7 Channel
8 Insulating layer
9 Via
10, 20 Planar coil
100 Transformer
200 Wireless power transmitter
300 Electromagnet

## Claims

1. A planar coil (10, 20) comprising:
a base (1) comprising a first surface (1a) and a magnetic material; and
a first metal layer (2a) located on the first surface (1a) and comprising voids (3),
**characterized in that** the base (1) comprises a channel (7) inside the base (1).

2. The planar coil (10, 20) according to claim 1, wherein the base (1) is a magnetic material.

3. The planar coil (10, 20) according to claim 1 or 2, wherein
the first metal layer (2a) comprises first metal particles (4) and second metal particles (5), and
the voids (3) are located between the first metal particles (4) and the second metal particles (5).

4. The planar coil (10, 20) according to any one of claims 1 to 3, further comprising:
a bonding layer (6) located between the first metal layer (2a) and the first surface (1a).

5. The planar coil (10, 20) according to claim 4, wherein the bonding layer (6) comprises resin or glass.

6. The planar coil (10, 20) according to any one of claims 1 to 5, wherein
the base (1) comprises a protruding portion (1c) protruding from the first surface (1a), and
a height of the protruding portion (1c) is higher than a height of the first metal layer (2a).

7. The planar coil (10, 20) according to claim 6, wherein the protruding portion (1c) is located around the first metal layer (2a) located on the first surface (1a).

8. The planar coil (10, 20) according to claim 6 or 7, wherein the protruding portion (1c) comprises a through hole (1d) penetrating in a thickness direction of the protruding portion (1c).

9. The planar coil (10, 20) according to any one of claims 1 to 8, further comprising:
an insulating layer (8) located between the first metal layer (2a) and the first surface (1a).

10. The planar coil (10, 20) according to any one of claims 1 to 9, further comprising:
a second metal layer (2b) located on a second surface (1b) facing the first surface (1a) in the base (1) and comprising voids (3).

11. The planar coil (10, 20) according to claim 10, further comprising:
a via (9) that electrically connects between the first metal layer (2a) and the second metal layer (2b).

12. A transformer (100) comprising:
the planar coil (10, 20) according to any one of claims 1 to 11.

13. A wireless power transmitter (200) comprising:
the planar coil (10, 20) according to any one of claims 1 to 11.

14. An electromagnet (300) comprising:
the planar coil (10, 20) according to any one of claims 1 to 11.

## Patentansprüche

1. Planare Spule (10, 20), aufweisend:
eine Basis (1), die eine erste Fläche (1a) und ein magnetisches Material aufweist, und
eine erste Metallschicht (2a), die auf der ersten Fläche (1a) angeordnet ist und Hohlräume (3) aufweist,
**dadurch gekennzeichnet, dass** die Basis (1) einen Kanal (7) innerhalb der Basis (1) aufweist.

2. Planare Spule (10, 20) gemäß Anspruch 1,
wobei die Basis (1) ein magnetisches Material ist.

3. Planare Spule (10, 20) gemäß Anspruch 1 oder 2, wobei
die erste Metallschicht (2a) erste Metallpartikel (4) und zweite Metallpartikel (5) aufweist und
die Hohlräume (3) zwischen den ersten Metallpartikeln (4) und den zweiten Metallpartikeln (5) angeordnet sind.

4. Planare Spule (10, 20) gemäß irgendeinem der Ansprüche 1 bis 3, ferner aufweisend:
eine Verbindungsschicht (6), die zwischen der ersten Metallschicht (2a) und der ersten Fläche (1a) angeordnet ist.

5. Planare Spule (10, 20) gemäß Anspruch 4,
wobei die Verbindungsschicht (6) Harz oder Glas aufweist.

6. Planare Spule (10, 20) gemäß irgendeinem der Ansprüche 1 bis 5, wobei
die Basis (1) einen Vorsprungsabschnitt (1c) aufweist, der von der ersten Fläche (1a) hervorsteht, und
eine Höhe des Vorsprungsabschnitts (1c) höher als eine Höhe der ersten Metallschicht (2a) ist.

7. Planare Spule (10, 20) gemäß Anspruch 6,
wobei der Vorsprungsabschnitt (1c) um die erste Metallschicht (2a) herum angeordnet ist, die sich auf der ersten Fläche (1a) befindet.

8. Planare Spule (10, 20) gemäß Anspruch 6 oder 7, wobei der Vorsprungsabschnitt (1c) ein Durchgangsloch (1d) aufweist, das in einer Dickenrichtung des Vorsprungsabschnitts (1c) hindurchtritt.

9. Planare Spule (10, 20) gemäß irgendeinem der Ansprüche 1 bis 8, ferner aufweisend:
eine Isolierschicht (8), die zwischen der ersten Metallschicht (2a) und der ersten Fläche (1a) angeordnet ist.

10. Planare Spule (10, 20) gemäß irgendeinem der Ansprüche 1 bis 9, ferner aufweisend:
eine zweite Metallschicht (2b), die auf einer zweiten Fläche (1b) angeordnet ist, die der ersten Fläche (1a) in der Basis (1) zugewandt ist, und Hohlräume (3) aufweist.

11. Planare Spule (10, 20) gemäß Anspruch 10, ferner aufweisend:
eine Durchkontaktierung (9), die zwischen der ersten Metallschicht (2a) und der zweiten Metallschicht (2b) elektrisch verbindet.

12. Transformator (100), aufweisend:
die planare Spule (10, 20) gemäß irgendeinem der Ansprüche 1 bis 11.

13. Drahtloser Energieüberträger (200), aufweisend:
die planare Spule (10, 20) gemäß irgendeinem der Ansprüche 1 bis 11.

14. Elektromagnet (300), aufweisend:
die planare Spule (10, 20) gemäß irgendeinem der Ansprüche 1 bis 11.

## Revendications

1. Bobine plane (10, 20) comprenant :
une base (1) comprenant une première surface (1a) et un matériau magnétique ; et
une première couche métallique (2a) située sur la première surface (1a) et comprenant des vides (3),
**caractérisée en ce que** la base (1) comprend un canal (7) à l'intérieur de la base (1).

2. Bobine plane (10, 20) selon la revendication 1,
dans laquelle la base (1) est un matériau magnétique.

3. Bobine plane (10, 20) selon la revendication 1 ou 2,
dans laquelle la première couche métallique (2a) comprend des premières particules métalliques (4) et des deuxièmes particules métalliques (5), et
les vides (3) sont situés entre les premières particules métalliques (4) et les deuxièmes particules métalliques (5).

4. Bobine plane (10, 20) selon l'une quelconque des revendications 1 à 3, comprenant en outre :
une couche de liaison (6) située entre la première couche métallique (2a) et la première surface (1a).

5. Bobine plane (10, 20) selon la revendication 4,
dans laquelle la couche de liaison (6) comprend de la résine ou du verre.

6. Bobine plane (10, 20) selon l'une quelconque des revendications 1 à 5, dans laquelle
la base (1) comprend une partie en saillie (1c) faisant saillie de la première surface (1a), et
une hauteur de la partie en saillie (1c) est supérieure à une hauteur de la première couche métallique (2a) .

7. Bobine plane (10, 20) selon la revendication 6,
dans laquelle la partie en saillie (1c) est située autour de la première couche métallique (2a) située sur la première surface (1a).

8. Bobine plane (10, 20) selon la revendication 6 ou 7,
dans laquelle la partie en saillie (1c) comprend un trou traversant (1d) pénétrant dans un sens de l'épaisseur de la partie en saillie (1c).

9. Bobine plane (10, 20) selon l'une quelconque des revendications 1 à 8, comprenant en outre :
une couche isolante (8) située entre la première couche métallique (2a) et la première surface (1a).

10. Bobine plane (10, 20) selon l'une quelconque des revendications 1 à 9, comprenant en outre :
une deuxième couche métallique (2b) située sur une deuxième surface (1b) faisant face à la première surface (1a) dans la base (1) et comprenant des vides (3).

11. Bobine plane (10, 20) selon la revendication 10, comprenant en outre :
un trou d'interconnexion (9) qui relie électriquement entre la première couche métallique (2a) et la deuxième couche métallique (2b).

12. Transformateur (100), comprenant :
la bobine plane (10, 20) selon l'une quelconque des revendications 1 à 11.

13. Émetteur d'énergie sans fil (200), comprenant :
la bobine plane (10, 20) selon l'une quelconque des revendications 1 à 11.

14. Électroaimant (300), comprenant :
la bobine plane (10, 20) selon l'une quelconque des revendications 1 à 11.
